# EUROPEAN PATENT SPECIFICATION

(11) **EP 3 241 690 B1**
(45) Date of publication and mention of the grant of the patent: **25.09.2019**
(21) Application number: 15875017.4
(22) Date of filing: 25.11.2015
(51) Int. Cl.: B60F 1/00

(54) **CITY RAIL TRANSIT VEHICLE**
SCHIENENTRANSPORTFAHRZEUG FÜR DIE STADT
VÉHICULE DE TRANSPORT FERROVIAIRE URBAIN

(30) Priority: 29.12.2014 CN 201410840177
(43) Date of publication of application: 08.11.2017
(73) Proprietor: CRRC TANGSHAN CO., LTD., Fengrun District Tangshan Hebei 063035 (CN)
(72) Inventor: SUN, Bangcheng, Hebei 063035 (CN); HUANG, Liewei, Hebei 063035 (CN); LI, Minggao, Hebei 063035 (CN); CUI, Tao, Hebei 063035 (CN); FU, Wenchao, Hebei 063035 (CN); GAO, Feng, Hebei 063035 (CN); LI, Ming, Hebei 063035 (CN)
(74) Representative: J A Kemp
(86) International application number: PCT/CN2015/095492
(87) International publication number: WO 2016/107338

(56) References cited:
- WO-A1-2007/107079
- WO-A1-2014/032126
- CN-A- 1 827 409
- CN-A- 1 827 409
- CN-A- 102 107 593
- CN-A- 104 553 645
- FR-A1- 2 741 582
- US-B1- 6 352 035
- US-B1- 6 352 035

## Description

### TECHNICAL FIELD

The present invention relates to the transportation field, especially to an urban rail transit vehicle.

### BACKGROUND

Currently, living centers, business centers and leisure centers in different domestic cities vary widely, in terms of the time, direction and volume of passenger flows, and correspondingly, vehicles massively marshaled or with a rather short tracking time are necessary in a certain direction requiring a colossal carrying capacity during the rush hour, while vehicles less frequently marshaled are enough for a low carrying capacity during other periods or in other regions. As a result, the urban rail transit vehicle is required to have characteristics, such as a large equivalent carrying capacity and flexible marshalling.

Modern tramcars and light rails, subways and main-line railway transportation vehicles are supported, driven and guided by steel wheels/steel rails; while traditional automobiles and modern bus rapid transit adopts rubber wheels/a road surface to be supported, driven and guided. But the above tramcars and light rails, subways and main-line railway transportation vehicles can travel on nothing but exclusive tracks, and the road surface is not one of those; on the other hand, the conventional automobiles and modern bus rapid transit can only travel on the road surface, and not on tracks; thus vehicles of various types and running lines with multiple modes are needed to be configured to satisfy diversified running pattern, causing waste of resources and high traffic construction overheads.

WO 2007/107079 A1 describes an energy-saving environment-protecting vehicle and its traveling line.

WO 2014/032126 A1 describes a railway traction vehicle that is equipment with four rubber wheels and with four steel rail wheels.

CN 1827409 A a smart car and a railway, which mainly consist of a car equipped with steel wheels and a line with a rail on the road surface.

US 6352035 B1 describes a track traveling vehicle having rubber tires for engaging a public road to permit the vehicle to travel thereon, which also has metal wheels capable of engaging rails associated with a track for permitting the vehicle to travel.

FR 2741582 A1 describes a vehicle running on pneumatic tyre wheels, which is guided by the rails (2) of an existing track by means of bogies (3) with retractable wheels (4).

### SUMMARY

The present invention provides an urban rail transit vehicle, for addressing the deficiency in the prior art that vehicles can only travel on a single type of lines, thus realizing running of a vehicle on multiple types of lines, and reducing construction cost.

An urban rail transit vehicle, including a vehicle body, a plurality of driving rubber wheels and guiding steel wheels are mounted on the bottom of the vehicle body; the plurality of driving rubber wheels are arranged along the length of the vehicle body, the plurality of guiding steel wheels are arranged along the length of the vehicle body; a first driving device is provided on the vehicle body for driving the guiding steel wheels to move up and down along the height of the vehicle body, the front and back of the vehicle body are further provided with an auxiliary rubber wheel for supporting the vehicle body in an auxiliary manner, characterised in that the vehicle body is provided with a second driving device for driving the auxiliary rubber wheels to move up and down.

In the urban rail transit vehicle as described above, further including a synchronous control system for controlling a plurality of the first driving device to move up or down synchronously; the guiding steel wheels are arranged in pairs along the width of the vehicle body, a first axle is arranged through the center of the guiding steel wheel, the first axle is installed at the lower part of a side frame of a bogie. The first driving device includes hydraulic cylinders arranged respectively corresponding to each of the guiding steel wheels, the hydraulic cylinder is arranged vertically along the height of the vehicle body, and an output shaft of the hydraulic cylinder is fixedly connected with the first axle.

In the urban rail transit vehicle as described above, further including a synchronous control system for controlling a plurality of the second driving devices to move up or down synchronously; the auxiliary rubber wheels are arranged in pairs along the width of the vehicle body, a second axle is arranged through the center of the auxiliary rubber wheel, and is installed at installed at the lower part of the side frame of the bogie; the second driving device comprises hydraulic cylinders arranged respectively corresponding to each of the auxiliary rubber wheels, the hydraulic cylinder is arranged vertically along the height of the vehicle body, and the output shaft of the hydraulic cylinder is fixedly connected with the second axle.

In the urban rail transit vehicle as described above, the vehicle body includes at least two carriages, every two of the carriages are hinged together via a coupler connection device; and the driving rubber wheel is arranged between every two of the carriages.

In the urban rail transit vehicle as described above, a first axle is arranged rotatablely through the center of each of the guiding steel wheels, the number of the guiding steel wheels is equal to that of the first axles, and the first axles are arranged at the lower parts on both sides of the side frame of the bogie.

In the urban rail transit vehicle as described above, a second axle is arranged rotatablely through the center of each of the auxiliary rubber wheels, the number of the auxiliary rubber wheels is equal to that of the second axles, and the second axles are arranged at the lower parts on both sides of the side frame of the bogie.

In the urban rail transit vehicle as described above, further includes a portal frame bogie, the driving rubber wheels are respectively arranged below two side frames of the portal frame bogie which are opposite to each other; a third axle is arranged rotatablely through the center of each of the driving rubber wheels, the number of the driving rubber wheels is equal to that of the third axles, and the third axles are installed at the lower parts on both sides of a side frame of the bogie.

In the urban rail transit vehicle as described above, the driving rubber wheel is driven by a direct drive motor, which is a wheel rim motor or a hub motor.

In the urban rail transit vehicle provided by the present invention, a plurality of driving rubber wheels and guiding steel wheels are installed on the bottom of a vehicle body; the driving rubber wheels drive the vehicle to march forward, the guiding steel wheels are driven to move up or down by a first driving device. When running on a railway is expected, the first driving device drives the guiding steel wheels to move down, and the guiding steel wheels cooperate with the railway to realize guiding, while the driving rubber wheels realize driving; and accordingly, a rubber wheel supporting road surface is built up alongside the railway line for the driving rubber wheels to travel upon; and in the case where running over an automobile transport road surface is required, the first driving device drives the guiding steel wheels to move up, thus achieving running of a vehicle merely by the driving rubber wheels, so as to realize seamless running of a vehicle across different lines, diversifying applications of the vehicle, and reducing construction cost.

### BRIEF DESCRIPTION OF THE DRAWINGS

FIG. 1 is a front view of an urban rail transit vehicle provided by an embodiment of the present invention;
FIG. 2 is a top view of an urban rail transit vehicle provided by the embodiment of the present invention;
FIG. 3 is a first structural schematic diagram in which a driving rubber wheel and a wheel rim motor are fitted together provided by an embodiment of the present invention;
FIG. 4 is a second structural schematic diagram in which a driving rubber wheel and a wheel rim motor are fitted together provided by another embodiment of the present invention.

### Reference signs:

1-vehicle body; 11-carriage; 2-driving rubber wheel; 3-guiding steel wheel; 4-auxiliary rubber wheel; 5-coupler connection device; 6-rubber wheel supporting road surface; 7-direct drive motor.

### DESCRIPTION OF EMBODIMENTS

In order to make the objectives, technical solutions and advantages of embodiments of the present invention clearer, the technical solutions of the embodiments of the present invention will be described clearly and completely in conjunction with accompanying drawings and the embodiments of the present invention. And obviously, the described embodiments are just part rather than all embodiments of the present invention. All the other embodiments acquired by one with ordinary skill in the art based on the embodiments of the present invention without delivering creative efforts shall fall into the protection scope of the present invention.

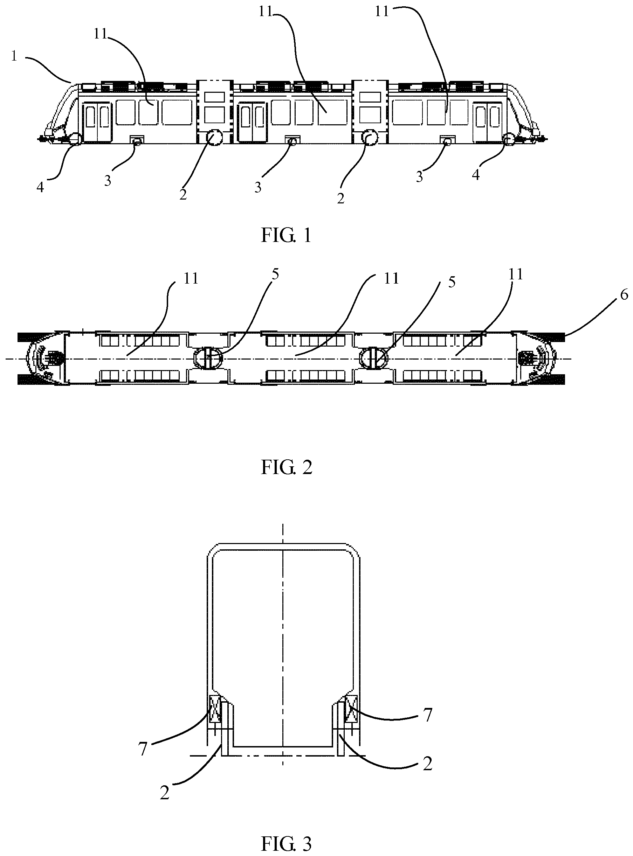

FIG. 1 is a front view of an urban rail transit vehicle provided by an embodiment of the present invention; FIG. 2 is a top view of an urban rail transit vehicle provided by the embodiment of the present invention; in reference with figures 1-2, this embodiment provides an urban rail transit vehicle, including a vehicle body 1, a plurality of driving rubber wheels 2 and guiding steel wheels 3 are installed at the bottom of the vehicle body 1; the plurality of driving rubber wheels 2 are arranged along the length of the vehicle body, the plurality of guiding steel wheels 3 are arranged along the length of the vehicle body; a first driving device provided on the vehicle body 1 for driving the guiding steel wheels 3 to move up and down along the height of the vehicle body.

In the above embodiment, specifically, the driving rubber wheels 2 and the guiding steel wheels 3 may be arranged alternately along the length of the vehicle body 1, wherein along the width of the vehicle body 1, the driving rubber wheels 2 may be arranged on the outermost side of the vehicle body 1, while the guiding steel wheels 3 may be arranged on the inner side of the driving rubber wheels 2, the guiding steel wheel 3 is connected with the vehicle body 1 via a bogie, and definitely, the bogie may be provided with a suspension system, ensuring good damping effect, and high stability and comfortability during running of a vehicle; and to be clear, a rubber wheel supporting road surface 6, correspondingly, may be built up alongside railway lines (subway or light-rail lines and the like), for the driving rubber wheels 2 to travel on the supporting road surface. The guiding steel wheels 2 fulfill a guiding role on the railway, the guiding steel wheel 2 is fixedly connected with the first driving device, to be driven to move up or down by the first driving device. When the vehicle moves along a curve, an electronic differential may be adopted to realize different turning speeds of left and right driving rubber wheels 2, so as to guarantee that the left and right driving rubber wheels 2 simultaneously make a turn of the same angle, thereby improving safety performance during the turning.

In the urban rail transit vehicle provided by this embodiment, guiding steel wheels 3 which are able to move up and down are provided at the bottom of the vehicle body 1, allowing an operator to select upward or downward motion of the guiding steel wheels 3 in accordance with specific routes to travel along, in which the first driving device drives the guiding steel wheels 3 to move down when running on a railway is expected, and the guiding steel wheels 3 cooperates with the railway to realize the guiding function during running of the vehicle, while the driving rubber wheels 2 realizes a driving function; and when running on an automobile transport road surface is expected, the first driving device drives the guiding steel wheels to move up, in which case it only requires driving by the driving rubber wheels 2 to realize running of the vehicle; as a result, trans-travel of the same vehicle across different routes can come true; in addition, when running on a railway, the guiding steel wheels 3 play a guiding role while the driving rubber wheels 2 a driving role, thus in comparison with an approach in the prior art, wherein steel wheels and steel railways are employed to achieve driving and guiding, the driving rubber wheels 2 function to increase the attaching force of the wheels, thereby realizing high attaching-force driving. The coordinated application of the guiding steel wheels 3 and the ground driving rubber wheels 2 realizes seamless trans-line traveling of a vehicle between a conventional railway and an automobile transport road surface.

In this embodiment, the urban rail transit vehicle may also include a synchronous control system for controlling multiple first driving devices to move up or down synchronously; the guiding steel wheels 3 are arranged in pairs along the width of the vehicle body, and a first axle is arranged through the center of the guiding steel wheel 3, the first axles are installed at the lower part of the side frame of the bogie; the first driving device includes hydraulic cylinders which are arranged respectively corresponding to each of the guiding steel wheels 3, the hydraulic cylinders are arranged vertically along the height of the vehicle body 1, and an output shaft of the hydraulic cylinder is fixedly connected with the first axle. The first axles may be installed on a bogie of the vehicle body. The guiding steel wheel 3 may rotate around the center of the first axle on the first axle, the output shaft of the hydraulic cylinder is fixed on the first axle, such that the upward and downward motions of the first axle, namely, the moving up and down of the guiding steel wheel is realized through extensions and contractions of the output shaft of the hydraulic cylinder; there are no specific restrictions for the number of the hydraulic cylinders connected with the same first axle, and preferably, three hydraulic cylinders may be arranged evenly along the length of the first axle, so as to realize synchronous upward and downward motion. Of course, one with ordinary skill in the art would understand that, the hydraulic cylinders may also be replaced by other devices capable of outputting reciprocating linear motions, such as through cylinders.

In addition, the front and back of the vehicle body 1 are further provided with an auxiliary rubber wheel 4 for supporting the vehicle body 1 in an auxiliary manner. The auxiliary rubber wheel 4 may be designed to endow the vehicle body 1 with better smoothness while shouldering part of the weight of the vehicle body 1; the auxiliary rubber wheel 4 may be the same as the driving rubber wheels 2 in structure, but may march forward merely under traction, rather than participating in the driving, and correspondingly, when the vehicle runs on a railway, both the auxiliary rubber wheel 4 and the driving rubber wheels 2 travel on the rubber wheel supporting surface; and when running on an automobile transport road surface is expected, what is required is moving the guiding steel wheels 3 up away from the ground by the first driving device, and the auxiliary rubber wheel 4 fulfills a guiding part (for example, realizing manual turning with a steering wheel and so on).

Likewise, the auxiliary rubber wheels 4 are also designed as a structure capable of moving up and down, specifically, the vehicle body 1 is provided with a second driving device for driving the auxiliary rubber wheel 4 up and down. And a synchronous control system for controlling multiple second driving devices to move up or down synchronously is also included; the auxiliary rubber wheels 4 are arranged in pairs along the width of the vehicle body, a second axle is arranged through the center of the auxiliary rubber wheel 4, and the second axles are installed at the lower part of the side frame of a bogie; the second driving device includes hydraulic cylinders which are arranged respectively corresponding to each of the auxiliary rubber wheel 4, the hydraulic cylinders are arranged vertically along the height of the vehicle body, and an output shaft of the hydraulic cylinder is fixedly connected with the second axle. The second axles may be installed at the bogie of the vehicle body; the auxiliary rubber wheel 4 may rotate on the second axle around the center thereof, and the output shaft of the hydraulic cylinder is fixed on the second axle, so as to realize the upward and downward motions of the first axle, namely, the moving up and down of the auxiliary rubber wheel 4, through extensions and contractions of the output shaft of the hydraulic cylinder. There are no specific restrictions for the number of the hydraulic cylinders connected with the same second axle, and preferably, three hydraulic cylinders may be arranged evenly along the length of the second axle, thereby realizing synchronous ups and downs. Definitely, one with ordinary skill in the art would understand that, the hydraulic cylinders may also be replaced by other devices capable of outputting reciprocal linear motions, such as cylinders, etc.

A first axle is arranged rotatablely through the center of each of the guiding steel wheels 3, the number of the guiding steel wheels 3 is equal to that of the first axles, which are arranged at the lower parts on both sides of the side frame of the bogie; similarly, a second axle is arranged rotatablely through the center of each of the auxiliary rubber wheels 4, the number of the auxiliary rubber wheels 4 is equal to that of the second axles, which are arranged at the lower parts on both sides of the side frame of the bogie. In such a way, within the vehicle body, the floor thereof will not be too high due to axles arranged across the middle of the bogie, thus facilitating increasing the space in the vehicle body and in turn the space to be occupied by passengers, and reducing per capita energy consumption.

In a case where the vehicle provided by this embodiment runs on a railway line, the first driving device drives the guiding steel wheels 3 to move down by means of the second driving device driving the ground auxiliary rubber wheels 4 to move up; and the driving rubber wheels 2 cooperate with the guiding steel wheels 3 while marching forward.

In a case where the vehicle provided by this embodiment runs on an automobile transport road surface, the first driving device drives the guiding steel wheels 3 to move up, the second driving device drives the ground auxiliary rubber wheel 4 to move down; and the driving rubber wheels 2 cooperate with the auxiliary rubber wheel 4 while marching forward.

Referring to FIGS 1-2, the vehicle body 1 may include at least two carriages 11, every two of the carriages 11 are hinged together via a coupler connection device 5, so as to deliver the functions of weight bearing, traction and braking power transmission.

Preferably, the driving rubber wheels 2 may be arranged between every two of the carriages 11. A bogie is also included, and the bogie may be a portal frame bogie; driving rubber wheels 2 may be respectively arranged below two side frames of the bogie which are arranged opposite to each other; a third axle is arranged rotatablely through the center of each of the driving rubber wheels 2, the number of the driving rubber wheels 2 is equal to that of the third axles, which are installed at a corresponding side frame of the bogie. Specifically, the driving rubber wheel 2 is rotatablely arranged through the third axle via a rolling bearing. In this embodiment, each driving rubber wheel 2 respectively corresponds to a third axle, in other words, a left driving rubber wheel 2 and a right driving rubber wheel 2 are not connected together via the same axle, on the contrary, the third axles of the driving rubber wheels 2 are independent from each other, such that within the vehicle body, the floor thereof will not be too high due to axles arranged across the middle of the bogie, thus facilitating increasing the inner space of the vehicle body and in turn the space occupied by passengers, and lowering per capita energy consumption.

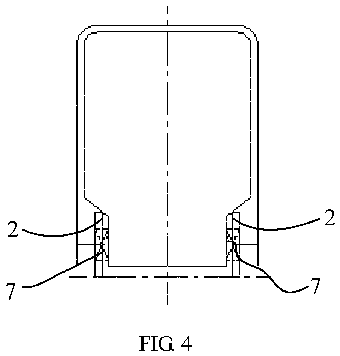

The driving rubber wheels 2 may be driven by a direct drive motor 7, FIG. 3 is a first structural schematic diagram in which a driving rubber wheel and a wheel rim motor are fitted together provided by an embodiment of the present invention; in this embodiment, the driving rubber wheels 2 are driven by a wheel rim motor, which is installed next to the driving rubber wheels 2, and the driving rubber wheels 2 are driven to rotate by power outputted by the output shaft of the wheel rim motor. Alternatively, the direct drive motor 7 may also be a hub motor, FIG. 4 is a second structural schematic diagram in which a driving rubber wheel and a wheel rim motor are fitted together provided by another embodiment of the present invention. As shown in FIG. 4, the driving rubber wheels 2 are driven to rotate by a motor rotator which directly acts as a hub. Driving by the direct drive motor 7 can overcome, for an conventional vehicle, the deficiency of lack of comfortability within a vehicle arising from too much noise generated during engagement of gears in a gearbox, adding to the fact that excessive gears necessary for power transmission are arranged over the entire vehicle; and the driving manner adopted by the present invention can minimize the usage of the gearboxes, lower noise of the vehicle, and in the meantime reduce fault points due to reduction of the gearboxes.

The scope of protection is defined by the appended claims.

## Claims

1. An urban rail transit vehicle, comprising a vehicle body (1), a plurality of driving rubber wheels (2) and guiding steel wheels (3) mounted on a bottom of the vehicle body (1); wherein, the plurality of driving rubber wheels (2) are arranged along the length of the vehicle body (1), the plurality of guiding steel wheels (3) are arranged along the length of the vehicle body (1); a first driving device is provided on the vehicle body (1) for driving the guiding steel wheels (3) to move up and down along a height of the vehicle body (1); the front and the back of the vehicle body (1) are further provided with an auxiliary rubber wheel (4) for supporting the vehicle body (1) in an auxiliary manner; **characterised in that** the vehicle body (1) is provided with a second driving device for driving the auxiliary rubber wheels (4) to move up and down.

2. The urban rail transit vehicle in accordance with claim 1, further comprising: a synchronous control system for controlling a plurality of the first driving device to move up or down synchronously; the guiding steel wheels (3) are arranged in pairs along the width of the vehicle body (1), a first axle is arranged through a center of each of the guiding steel wheels (3), the first axle is installed at a lower part of a side frame of a bogie; the first driving device comprises hydraulic cylinders arranged respectively corresponding to each of the guiding steel wheels (3), the hydraulic cylinder is arranged vertically along the height of the vehicle body (1), and an output shaft of the hydraulic cylinder is fixedly connected with the first axle.

3. The urban rail transit vehicle in accordance with claim 1, further comprising a synchronous control system for controlling a plurality of the second driving devices to move up or down synchronously; the auxiliary rubber wheels (4) are arranged in pairs along a width of the vehicle body (1), a second axle is arranged through a center of the auxiliary rubber wheel (4), and is installed at the lower part of the side frame of a bogie; the second driving device comprises hydraulic cylinders arranged respectively corresponding to each of the auxiliary rubber wheels (4), the hydraulic cylinder is arranged vertically along the height of the vehicle body (1), and the output shaft of the hydraulic cylinder is fixedly connected with the second axle.

4. The urban rail transit vehicle in accordance with claim 1, wherein, the vehicle body (1) comprises at least two carriages (11), every two of the carriages (11) are hinged together via a coupler connection device (5); and the driving rubber wheels (2) are arranged between every two of the carriages (11).

5. The urban rail transit vehicle in accordance with claim 2, wherein, a first axle is arranged rotatably through the center of each of the guiding steel wheels (3), the number of the guiding steel wheels (3) is equal to that of the first axles, and the first axles are arranged at the lower parts on both sides of the side frame of the bogie.

6. The urban rail transit vehicle in accordance with claim 3, wherein, a second axle is arranged rotatably through the center of each of the auxiliary rubber wheels (4), the number of the auxiliary rubber wheels (4) is equal to that of the second axles, and the second axles are arranged at the lower parts on both sides of the side frame of the bogie.

7. The urban rail transit vehicle in accordance with claim 1, further comprising a portal frame bogie, the driving rubber wheels (2) are respectively arranged below two side frames of the portal frame bogie which are opposite to each other; a third axle is arranged rotatably through the center of each of the driving rubber wheels (2), the number of the driving rubber wheels (2) is equal to that of the third axles, and the third axles are installed at the lower parts on both sides of a side frame of the bogie.

8. The urban rail transit vehicle in accordance with claim 7, wherein, the driving rubber wheel is driven by a direct drive motor (7), which is a wheel rim motor or a hub motor.

## Patentansprüche

1. Städtisches Schienentransportfahrzeug, umfassend einen Fahrzeugkörper (1), eine Vielzahl von Antriebsgummirädern (2) und Stahlführungsrädern (3), die an einem Boden des Fahrzeugbodens (1) montiert sind; wobei die Vielzahl von Antriebsgummirädern (2) entlang der Länge des Fahrzeugkörpers (1) angeordnet sind und die Vielzahl von Stahlführungsrädern (3) entlang der Länge des Fahrzeugkörpers (1) angeordnet sind; eine erste Antriebsvorrichtung an dem Fahrzeugkörper (1) zum Antreiben der Stahlführungsräder (3), sodass sie sich entlang einer Höhe des Fahrzeugkörpers (1) hoch und runter bewegen; die Vorderseite und die Rückseite des Fahrzeugkörpers (1) ferner mit einem Hilfsgummirad (4) zum Stützen des Fahrzeugkörpers (1) auf unterstützende Weise bereitgestellt sind; **dadurch gekennzeichnet, dass** der Fahrzeugkörper (1) mit einer zweiten Antriebsvorrichtung zum Antreiben der Hilfsgummiräder (4) bereitgestellt ist, sodass sie sich hoch und runter bewegen.

2. Städtisches Schienentransportfahrzeug nach Anspruch 1, ferner umfassend: ein synchrones Steuersystem zum Steuern einer Vielzahl der ersten Antriebsvorrichtung, sodass sie sich synchron hoch oder runter bewegt; wobei die Stahlführungsräder (3) paarweise entlang der Breite des Fahrzeugkörpers (1) angeordnet sind, eine erste Radachse durch eine Mitte von jedem der Stahlführungsräder (3) angeordnet ist, die erste Radachse an einem Unterteil eines Seitenrahmens eines Fahrwerks angebracht ist; die erste Antriebsvorrichtung Hydraulikzylinder umfasst, die jeweils entsprechend jedem der Stahlführungsräder (3) angeordnet sind, der Hydraulikzylinder vertikal entlang der Höhe des Fahrzeugkörpers (1) angeordnet ist und eine Abtriebswelle des Hydraulikzylinders mit der ersten Radachse fest verbunden ist.

3. Städtisches Schienentransportfahrzeug nach Anspruch 1, ferner umfassend ein synchrones Steuersystem zum Steuern einer Vielzahl der zweiten Antriebsvorrichtungen, sodass sie sich synchron hoch oder runter bewegen; wobei die Hilfsgummiräder (4) paarweise entlang einer Breite des Fahrzeugkörpers (1) angeordnet sind, eine zweite Radachse durch eine Mitte des Hilfsgummirads (4) angeordnet ist und an dem Unterteil des Seitenrahmens eines Fahrwerks angebracht ist; die zweite Antriebsvorrichtung Hydraulikzylinder umfasst, die jeweils entsprechend jedem der Hilfsgummiräder (4) angeordnet sind, der Hydraulikzylinder vertikal entlang der Höhe des Fahrzeugkörpers (1) angeordnet ist und die Abtriebswelle des Hydraulikzylinders mit der zweiten Radachse fest verbunden ist.

4. Städtisches Schienentransportfahrzeug nach Anspruch 1, wobei der Fahrzeugkörper (1) mindestens zwei Wägen (11) umfasst, wobei alle zwei der Wägen (11) über eine Kupplungsverbindungsvorrichtung (5) gelenkig miteinander verbunden sind; und die Antriebsgummiräder (2) zwischen allen zwei der Wägen (11) angeordnet sind.

5. Städtisches Schienentransportfahrzeug nach Anspruch 2, wobei eine erste Radachse drehbar durch die Mitte von jedem der Stahlführungsräder (3) angeordnet ist, die Anzahl der Stahlführungsräder (3) gleich der Anzahl der ersten Radachsen ist und die ersten Radachsen an den Unterteilen an beiden Seiten des Seitenrahmens des Fahrwerks angeordnet sind.

6. Städtisches Schienentransportfahrzeug nach Anspruch 3, wobei eine zweite Radachse drehbar durch die Mitte von jedem der Hilfsgummiräder (4) angeordnet ist, die Anzahl der Hilfsgummiräder (4) gleich der Anzahl der zweiten Radachsen ist und die zweiten Radachsen an den Unterteilen an beiden Seiten des Seitenrahmens des Fahrwerks angeordnet sind.

7. Städtisches Schienentransportfahrzeug nach Anspruch 1, ferner umfassend ein Portalrahmenfahrwerk, wobei die Antriebsgummiräder (2) entsprechend unter zwei Seitenrahmen des Portalrahmenfahrwerks, die einander gegenüberliegen, angeordnet sind; eine dritte Radachse drehbar durch die Mitte von jedem der Antriebsgummiräder (2) angeordnet ist, die Anzahl der Antriebsgummiräder (2) gleich der Anzahl der dritten Radachsen ist und die dritten Radachsen an den Unterteilen an beiden Seiten eines Seitenrahmens des Fahrwerks eingebaut sind.

8. Städtisches Schienentransportfahrzeug nach Anspruch 7, wobei das Antriebsgummirad durch einen Direktantriebsmotor (7) angetrieben wird, der ein Felgenmotor oder ein Nabenmotor ist.

## Revendications

1. Véhicule de transit ferroviaire urbain, comprenant une carrosserie de véhicule (1), une pluralité de roues d'entraînement en caoutchouc (2) et des roues de guidage en acier (3) montées sur un fond de la carrosserie de véhicule (1) ; la pluralité de roues d'entraînement en caoutchouc (2) étant agencées suivant la longueur de la carrosserie de véhicule (1), la pluralité de roues de guidage en acier (3) étant agencées suivant la longueur de la carrosserie de véhicule (1) ; un premier dispositif d'entraînement étant prévu sur la carrosserie de véhicule (1) pour entraîner les roues de guidage en acier (3) en déplacement vers le haut et vers le bas suivant une hauteur de la carrosserie de véhicule (1) ; l'avant et l'arrière de la carrosserie de véhicule (1) étant en outre pourvus d'une roue auxiliaire en caoutchouc (4) destinée à supporter la carrosserie de véhicule (1) de manière auxiliaire ; **caractérisé en ce que** la carrosserie de véhicule (1) est pourvue d'un deuxième dispositif d'entraînement destiné à entraîner les roues auxiliaires en caoutchouc (4) en déplacement vers le haut et vers le bas.

2. Véhicule de transit ferroviaire urbain selon la revendication 1, comprenant en outre : un système de commande synchrone destiné à commander une pluralité du premier dispositif d'entraînement pour un déplacement vers le haut ou vers le bas de manière synchrone ; les roues de guidage en acier (3) étant agencées en paires suivant la largeur de la carrosserie de véhicule (1), un premier essieu étant agencé à travers un centre de chacune des roues de guidage en acier (3), le premier essieu étant installé au niveau d'une partie inférieure d'un châssis latéral d'un bogie ; le premier dispositif d'entraînement comprenant des vérins hydrauliques agencés respectivement en correspondance avec chacune des roues de guidage en acier (3), les vérins hydrauliques étant agencés verticalement suivant la hauteur de la carrosserie de véhicule (1), et un arbre de sortie du vérin hydraulique étant raccordé fixement au premier essieu.

3. Véhicule de transit ferroviaire urbain selon la revendication 1, comprenant en outre un système de commande synchrone destiné à commander une pluralité de deuxièmes dispositifs d'entraînement pour un déplacement vers le haut ou vers le bas de manière synchrone ; les roues auxiliaires en caoutchouc (4) étant agencées en paires suivant une largeur de la carrosserie de véhicule (1), un deuxième essieu étant agencé à travers un centre de la roue auxiliaire en caoutchouc (4), et étant installé au niveau de la partie inférieure du châssis latéral d'un bogie ; le deuxième dispositif d'entraînement comprenant des vérins hydrauliques agencés respectivement en correspondance avec chacune des roues auxiliaires en caoutchouc (4), le vérin hydraulique étant agencé verticalement suivant la hauteur de la carrosserie de véhicule (1), et l'arbre de sortie du vérin hydraulique étant raccordé fixement au deuxième essieu.

4. Véhicule de transit ferroviaire urbain selon la revendication 1, dans lequel la carrosserie de véhicule (1) comprend au moins deux voitures (11), les deux voitures (11) étant articulées ensemble par le biais d'un dispositif de raccordement de couplage (5) ; et les roues d'entraînement en caoutchouc (2) étant agencées entre chacune deux des voitures (11).

5. Véhicule de transit ferroviaire urbain selon la revendication 2, dans lequel un premier essieu est agencé de manière rotative à travers le centre de chacune des roues de guidage en acier (3), le nombre des roues de guidage en acier (3) étant égal à celui des premiers essieux, et les premiers essieux étant agencés au niveau des parties inférieures sur les deux côtés du châssis latéral du bogie.

6. Véhicule de transit ferroviaire urbain selon la revendication 3, dans lequel un deuxième essieu est agencé de manière rotative à travers le centre de chacune des roues auxiliaires en caoutchouc (4), le nombre des roues auxiliaires en caoutchouc (4) étant égal à celui des deuxièmes essieux, et les deuxièmes essieux étant agencés au niveau des parties inférieures sur les deux côtés du châssis latéral du bogie.

7. Véhicule de transit ferroviaire urbain selon la revendication 1, comprenant en outre un bogie de portique, les roues d'entraînement en caoutchouc (2) étant respectivement agencées au-dessous de deux châssis latéraux du bogie de portique qui sont opposés l'un à l'autre ; un troisième essieu étant agencé de manière rotative à travers le centre de chacune des roues d'entraînement en caoutchouc (2), le nombre de roues d'entraînement en caoutchouc (2) étant égal à celui des troisièmes essieux, et les troisièmes essieux étant installés au niveau des parties inférieures sur les deux côtés d'un châssis latéral du bogie.

8. Véhicule de transit ferroviaire urbain selon la revendication 7, dans lequel la roue d'entraînement en caoutchouc est entraînée par un moteur à entraînement direct (7) qui est un moteur de jante ou un moteur de moyeu.
